Europäisches Patentamt

European Patent Office

Office européen des brevets

(11) Publication number: **0 439 176 A2**

## EUROPEAN PATENT APPLICATION

(21) Application number: 91100914.0

(22) Date of filing: 24.01.91

(51) Int. Cl.5: **H01H 13/70**

(30) Priority: 26.01.90 JP 15101/90

(43) Date of publication of application:
**31.07.91 Bulletin 91/31**

(84) Designated Contracting States:
**DE FR GB**

(71) Applicant: **CASIO COMPUTER COMPANY
LIMITED**
**6-1, 2-chome, Nishi-Shinjuku
Shinjuku-ku Tokyo(JP)**

(72) Inventor: **Hirosawa, Shigeru, c/o Patent Dep.,
Hamura R&D
Center, Casio Computer Co., Ltd., 3-2-1,
Sakae-cho
Hamura-machi,Nishitama-gun, Tokyo
190-11(JP)**

(74) Representative: **Patentanwälte Grünecker,
Kinkeldey, Stockmair & Partner
Maximilianstrasse 58
W-8000 München 22(DE)**

(54) **Key-input apparatus.**

(57) In a key input apparatus, a printed wiring board (23) having a plurality of stationary contacts (23a) is laid on an upper surface of a housing (10) storing an electronic circuit, etc. A rubber sheet (24) is laid on the printed wiring board, and has a plurality of elastically deformable protuberances (24a) at a plurality of positions corresponding to a plurality of stationary contacts on the printed wiring board. A plurality of movable contacts (25) are provided on lower surfaces of ceiling walls of the protuberances, and keytop members (26) are bonded on upper surfaces of the ceiling walls of those protuberances.

**FIG. 4**

EP 0 439 176 A2

# KEY-INPUT APPARATUS

The present invention relates to a key input apparatus used for electronic apparatuses like a desk-top type electronic calculator, an eleotronic note-book, or a personal computer, or the like.

Today, key input apparatuses, having various structures and used for electronic apparatuses such as a desk-top type electronic calculator, an electronic notebook, or a personal computer, or the like, are well known.

As a whole, those various key input apparatuses are classified into a click-type which makes the user sense a click feeling and a touch type which does not give any click feeling to the user. Conventionally, clicking rubber-key type key input apparatuses are widely used because the number of their parts is relatively small so that assembly thereof is very easy.

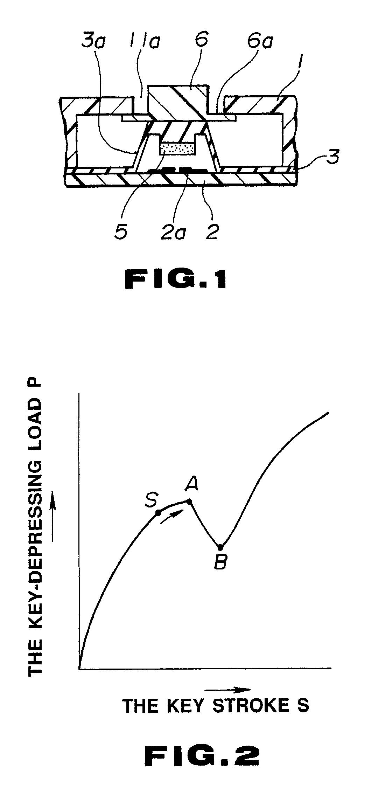

Fig. 1 shows a typical structure of a conventional clicking rubber-key type key input apparatus, which comprises an external housing 1, a printed wiring board 2, a rubber sheet 3, and a key-top member 6. The printed wiring board 2 is laid on a lower half case (not shown) of an electronic apparatus or on a supporting board (not shown) provided in the external housing 1. A stationary contact 2a is laid on the surface of the printed wiring board 2.

The rubber sheet 3 is laid on the printed wiring board 2 and has a protuberance 3a at a position corresponding to the stationary contact 2a on the printed wiring board 2. A movable contact 5 is provided on a lower surface of the protuberance 3a so that the movable contact 5 can be brought into contact with and left from the stationary contact 2a. The key-top member 6 is provided on an upper surface of the protuberance 3a.

An upper portion of the key top 6 project out through an opening 1a formed in the external housing 1, and a collar portion 6a is formed in a lower portion of the key-top member 6. The collar portion 6a is pressed on the periphery of the opening 1a in the lower surface of the external housing 1 by biasing force generated in the protuberance 3a of the rubber sheet 3.

When the user depresses the key-top member 6 of the key input apparatus constructed as described above, the user senses a click feeling generated by an elastic deformation characteristic of the protuberance 3a.

More particularly, as shown in Fig. 2, there is a schematically proportional relationship between a pressing force (load "P") applied to the key-top member 6 and an elastic deformation (stroke "S") of the protuberance 3a until the amount of the elastic deformation (stroke "S") arrives at a first predetermined value (point "A"). When the amount of the elastic deformation exceeds the first predetermined value (point "A"), the magnitude of the depressing force turns in the negative direction. When the amount of the elastic deformation arrives at a secondary preliminary value (point "B"), the magnitude of the depressing force again turns in the positive direction. In other words, the user can senses the click feeling through a process in which the amount of the elastic deformation of the protuberance 3a shifts from the first predetermined point "A" to the secondary predetermined point "B".

In the above described conventionally constructed key input apparatus, however, in order to prevent gap from being generated between the collar portion 6a of the key-top member 6 and the periphery of the opening 1a in the lower surface of the external housing 1 in a condition shown in Fig. 1, the protuberance 3a is preliminarily and elastically deformed up to the point "S" shown in Fig. 2 so that a preload generated by the preliminarily applied elastic deformation of the protuberance 3a, makes the collar portion 6a of the key top member 6 about against the periphery of the aperture 1a in the lower surface of the external housing 1.

Therefore, in the above described conventional key input apparatus, even when the user slightly depresses the key-top member 6, the protuberance 3a elastically deforms to the point "A" shown in Fig. 2, and as a result, the user cannot sense enough click feeling.

Furthermore, since the conventional key input apparatus constructed as described above needs the collar portion 6a formed in the key-top member 6, it is difficult to reduce the thickness of the key input apparatus.

This invention is derived from the above described situation, the object of the invention is to provide a key input apparatus which can surely make the user sense the enough click feeling and surely reduce the height thereof.

To achieve the above objects, the key input apparatus of the invention comprises: housing means for accommodating an electronic circuit therein; stationary contact means provided on an outer surface of the housing means and having a plurality of stationary contact portions; and movable contact means supported on the housing and having a plurality of movable contact portions which are respectively located at portions corresponding to the stationary contact portions, so as to be elastically movable between a contact position and a non-contact position, at the contact position the movable contact means being subjected with a pressing force and being deformed elastically to make the movable contact portions contact the corresponding stationary contact portions, at the non-contact position the movable contact means being free from the pressing force and being released from its elastic deformation to make the movable contact portions separate from the corresponding stationary contact portions.

This invention can be more fully understood from the following detailed description when taken in conjunction with the accompanying drawings, in which:

Fig. 1 is a sectional view schematically showing a structure of a conventional clicking rubber type key input apparatus;

Fig. 2 is a graph schematically showing a relationship between the key-depressing load P and the key stroke S in the conventional clicking rubber type key input apparatus;

Fig. 3 is a schematic perspective view of a desk-top type electronic calculator using a key input apparatus according to a first embodiment of the invention;

Fig. 4 is a schematic vertical sectional view taken along a line IV - IV of Fig. 3;

Fig. 5 is a schematic sectional view of an essential part of a key input apparatus according to a second embodiment of the invention;

Fig. 6 is a schematic sectional view of an essential part of a key input apparatus according to a third embodiment of the invention;

Fig. 7 is a schematic sectional view of an essential part of a key input apparatus according to a fourth embodiment of the invention;

Fig. 8 is a schematic perspective view of a desk-top type electronic calculator using a key input apparatus according to a fifth embodiment of the invention;

Fig. 9 is a schematic vertical sectional view taken along a line IX - IX of Fig. 8; and

Fig. 10 is a schematic sectional view of an essential part of a key input apparatus according to a sixth embodiment of the invention.

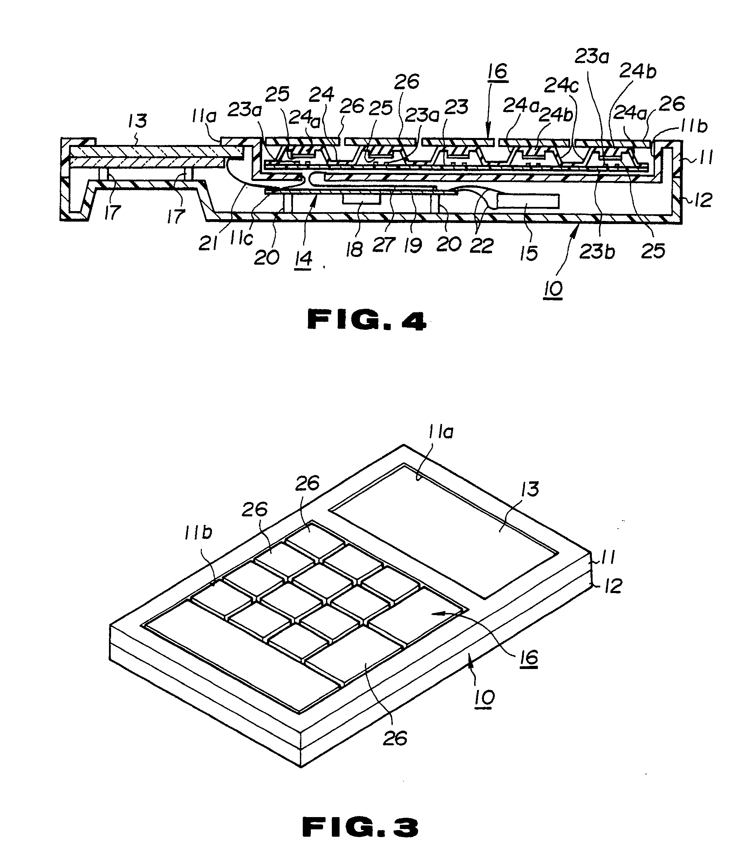

Various embodiments of the invention will be described below with reference to Figs. 3 to 10.

Figs. 3 and 4 schematically show a desk-top type electronic calculator in which a key input apparatus according to a first embodiment of the invention is mounted. The reference numeral 10 in Figs. 3 and 4 designates an external housing. The external housing 10 is composed of an upper case 11 and a lower case 12 which are respectively made of synthetic resin.

A liquid crystal display unit 13, an electronic circuit 14, and a battery 15, are installed in an innerspace of the external housing 10, and a key input unit 16 is installed on an outer surface of the external housing 10.

The liquid crystal display unit 13 is attached on an inner surface of the lower case 12 through supporting members 17 so that the liquid crystal display unit 13 corresponds to an aperture 11a formed in the upper case 11.

The electronic circuit 14 includes a circuit board 19 on which an LSI 18 is attached, and the circuit board 19 is attached on the inner surface of the lower case 12 through another supporting members 20. The liquid crystal display unit 13 is connected to the circuit board 19 via lead wires 21, and likewise, the battery 15 is also connected to the circuit board 19 via connection cables 22.

The key input unit 16 is mounted on a recessed base portion 11b formed in an upper surface of the upper case 11. The key input unit 16 includes a printed wiring board 23, a rubber sheet 24, a plurality of movable contact members 25, and a plurality of key-top members 26, respectively.

A plurality of stationary contacts 23a and lead wires (not shown) are formed on a surface of a substrate 23b of the printed wiring board 23 by printing either conductive rubber or carbon ink thereon. The back surface of the printed wiring board 23 is secured to the bottom surface of the recessed base portion 11b formed in the upper case 11 by means of adhesive or the like.

One ends of lead wires 27 are connected to the printed wiring board 23, and the other ends of the lead wires 27 are led into the inner space of the external housing 10 through a small aperture 11c formed in the recessed base portion 11b. The other ends of the lead wires 27 are connected to the circuit board 19 housed in the external housing 10.

The rubber sheet 24 is laid on the printed wiring board 23, and has a plurality of protuberances 24a, each having mesa-like shape (a circular truncated cone shape or a frustrum of pyramid), at plural positions corresponding to a plurality of stationary contacts 23a on the printed wiring board 23.

A movable contact 25 is provided on a lower surface of a ceiling wall 24b of each protuberance 24a, and the movable contact 25 is formed by transferring carbon ink to the lower surface of each ceiling wall 24b.

The key-top member 26 is made of synthetic resin and is bonded on the upper surface of the ceiling wall 24b of the protuberance 24a by means of adhesive on the like.

In the key input unit 16 constructed as described above, when pressing force is applied onto the key-top member 26, a lateral wall 24c of the corresponding protuberance 24a elastically sideward deforms so that the ceiling wall 24b lowers. The movable contact 25 attached on the lower surface of the lowered ceiling wall 24b is brought into contact with the corresponding stationary contact 23c on the printed wiring board 23, so that a key input signal corresponding to the depressed key-top member 26 is generated.

More particularly, since a key sampling signal is transmitted to the printed wiring board 23 of the key input unit 16 from the electronic circuit 14 via the lead wires 27, a key input signal corresponding to the stationary contact 23a contacted with the movable contact 25 is transmitted to the electronic circuit 14 via the lead wires 27.

When the pressing force is left from the key top member 26, the corresponding protuberance 24a is returned to its original shape by the elasticity of the side wall 24c. This causes the upward movement of the ceiling wall 24b so that the movable contact 25 is upwardly separate from the corresponding stationary contact 23a. Unlike the conventional clicking rubber type key input apparatus, since the protuberance 24a according to the embodiment of the invention is not preliminarily elastically deformed, the stroke of the protuberance 24a from a moment, at which pressing force is applied onto the key-top member 26, to a moment, at which the elastic deformation of the corresponding protuberance 24a reaches at point A in Fig. 2 can be sufficiently prolonged, compared to that stroke of the conventional protuberance. In consequence of this, when the user depresses the key-top member 26, he on she can fully sense a click feeling.

Next, when the pressing force applied to the key-top member 26 is released, due to the resilience of the lateral wall 24c, the corresponding protuberance 24 returns to its original shape. This causes the ceiling wall 24b to move upward so that the movable contact 25 upwardly leaves from the corresponding stationary contact 23a.

As mentioned above, the key input apparatus according to the first embodiment of the invention can make the user sufficiently sense a click feeling because the protuberance 24a is not preliminarily elastically deformed. Furthermore, since no collar portion is provided on the lower portion of the key-top member 26, the height of the key input apparatus according to the first embodiment can easily reduce its height. Furthermore, since no partition is provided between the plural key-top members 26, an assembling process of the key input apparatus according to the first embodiment can be easier than that of the conventional one, an an upper surface area of each key-top member 26 can be expanded so that a key operation can be easier than the conventional one.

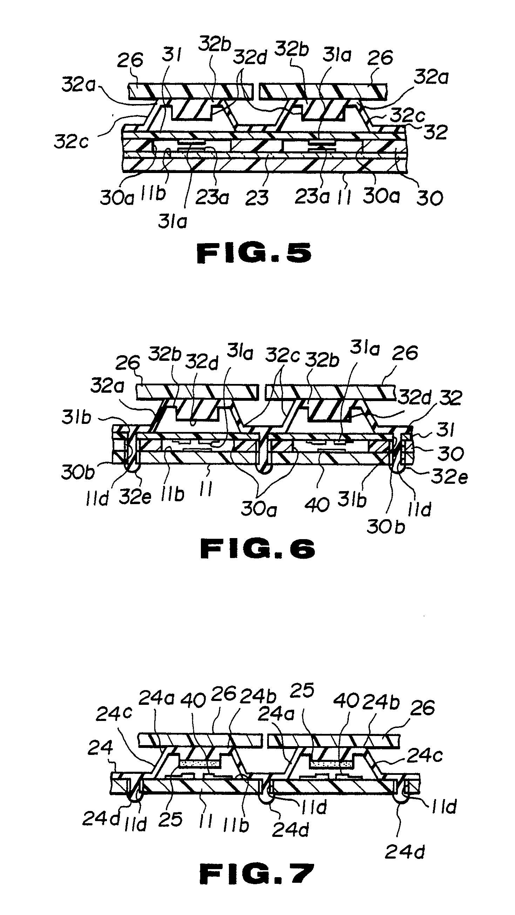

Referring now to Fig. 5, a second embodiment of the invention is described below.

Components identical to those of the first embodiment shown in Figs. 3 and 4 are designated by the same reference numerals, and thus, the detailed description concerning to these components is omitted.

In the clicking rubber-key type key input apparatus according to the second embodiment of the invention, a spacer 30 is laid on a printed wiring board 23 and is bonded thereto with adhesive or the like.

A plurality of apertures 30a are formed in the spacer 30 in correspondence with a plurality of stationary contacts 23a installed at plural positions on an upper surface of the printed wiring board 23. A flexible film 31 is bonded to an upper surface of the spacer 30 with adhesive or the like.

A plurality of movable contacts 31a are provided by printing process of carbon ink at plural positions on a lower surface of the flexible film 31 corresponding to the plural apertures 30a of the spacer 30.

A rubber sheet 32 is bonded onto the upper surface of the flexible film 31 with adhesive or the like. The rubber sheet 32 has the substantially same shape as that of the above described first embodiment.

A plurality of protuberances 32a are provided in the rubber sheet 32 to correspond to a plurality of movable contacts 31a on the flexible film 31. Each protuberance 32a has a mesa-like configuration (a circular truncated cone shape or a frustrum of pyramid). A small projection 32d is integrally formed with a lower surface of a ceiling wall 32 of each protuberance 32a.

When pressing force is applied onto a key-top member 26 in the key input apparatus according to the second embodiment of the invention and constructed as described above, a lateral wall 32c of the corresponding protuberance 32a elastically sideward deforms so that the ceiling wall 32 lowers. The small projection 32d of the lowered ceiling wall 32b presses a corresponding region of the flexible film 31 so that the corresponding region of the flexible film deflects downward. The movable contact 31a mounted on the lower surface of the deflected region of the flexible film 31 is brought into contact with the corresponding stationary contact 23a on the printed wiring board 23 so that a key input signal corresponding to the depressed key-top member 26 is generated.

Next, referring to Fig. 6, a third embodiment of the invention is described below.

The clicking rubber-key type key input apparatus according to the third embodiment has been improved from that of the above described second embodiment so that the third one is lower in height than the second one. In the third embodiment, stationary contacts 40 (in the second embodiment, it is designated by 23a) and the wiring pattern (not shown), both of which are provided on the upper surface of the printed wiring board 23 in the above described second embodiment are directly printed on a bottom surface (see Fig. 6) of a base portion 11b of an upper case 11. Through-holes 11d, 30b, and 31b are respectively formed at predetermined positions where the bottom surface of the base portion 11b of the upper case 11, a spacer 30 secured to the bottom surface of the base portion 11b, and a flexible film 31 secured to an upper surface of the spacer 30. A plurality of engaging portions 32a integrally formed with a lower surface of the rubber sheet 32 project downward at plural positions corresponding to plural units of those through-holes 11d, 30b, and 31b, which are linearly aligned. Each of these engaging portions 32e is inserted in the corresponding unit of linearly aligned through-holes 11d, 30b, and 31b. The inserted ends of the engaging portions 32e are respectively engaged with the inner surface of the upper case 11. As a result, the rubber sheet 32, the flexible film 31, and the spacer 30, are respectively secured to the upper case 11.

Fig. 7 shows a key input apparatus according to a fourth embodiment of the invention.

The clicking rubber-key type key input apparatus according to the fourth embodiment has been improved from that of the above described first embodiment so that the fourth one is lower in height than the first one. In the fourth embodiment, a plurality of stationary contacts 40 and wiring pattern (not shown) are directly printed on a bottom surface of a base portion 11b of an upper case 11, thus eliminating a printed wiring board 23 of the first embodiment.

As in the third embodiment, the key input apparatus according to the fourth embodiment also has a plurality of through-holes 11d at a plurality of predetermined positions on the bottom surface of the base portion 11b of the upper case 11. In addition, a plurality of engaging portions 24d projecting downward are integrally formed with a lower surface of a rubber sheet 24 at plural positions corresponding to the through-holes 11d. Each engaging portion 24d is inserted in the corresponding through-hole 11d, and the inserted end of the engaging portion 24d is engaged with an inner surface of the upper case 11 so that the rubber sheet 24 is secured to the upper case 11.

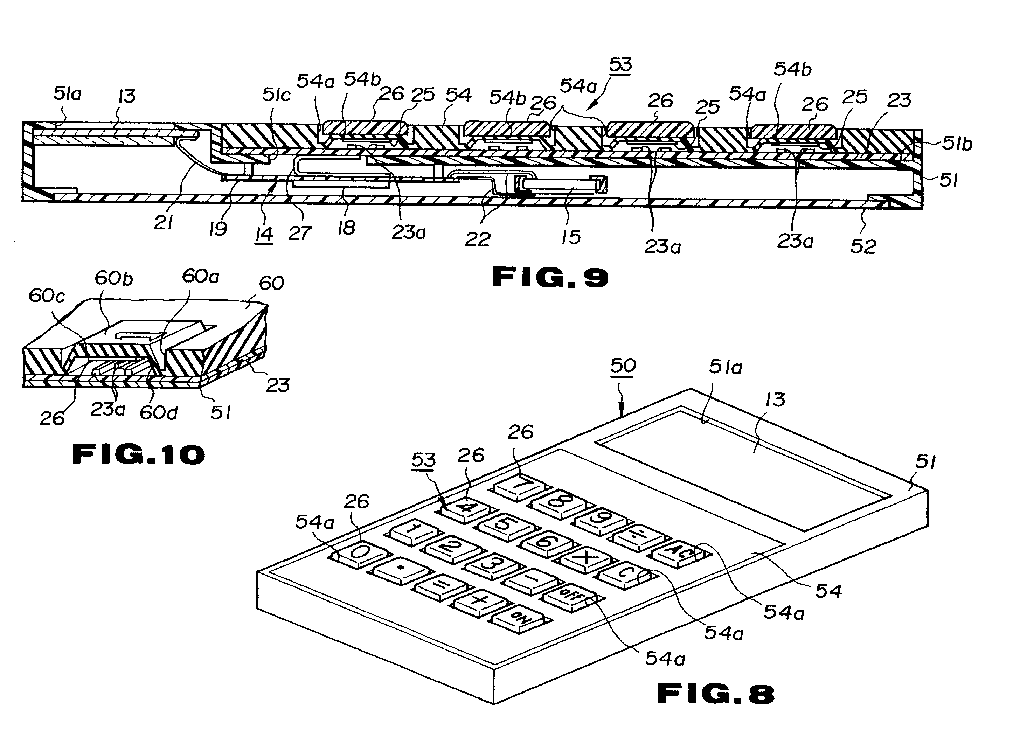

Next, referring now to Figs. 8 and 9, a fifth embodiment of the invention is described below.

Figs. 8 and 9 respectively shows a key input apparatus according to the fifth embodiment in a state that it is applied to a desk-top type electronic calculator, like the first embodiment.

Like the first embodiment, the desk-top electronic calculator comprises an external housing 50 composed of an upper case 51 and lower case 52, a liquid crystal display unit 13 housed in the external housing 50, an electronic circuit 14, a battery 15, and a key input unit 53 attached on a bottom surface of a base portion 51b formed in the upper case 51.

Like the first embodiment, the key input unit 53 comprises a printed wiring board 23 on which a plurality of stationary contacts 23a are disposed at a plurality of predetermined positions thereof, a rubber sheet 54, a plurality of movable contacts 25 which are disposed at a plurality of predetermined positions of the rubber sheet 54, and a plurality of key-top members 26 which are disposed at a plurality of predetermined positions on the rubber sheet 54.

The rubber sheet 54 has a predetermined thickness which is thicker than that of the rubber sheet 24 used in the first embodiment. The rubber sheet 54 contains a plurality of pits corresponding to a plurality of stationary contacts 23a of the printed wiring board 23. A plurality of protuberances 54b each having the same thickness as that of the protuberance 24a used in the first embodiment are formed in each pit 54a. Like the various preceding embodiments, each of these protuberance 54b has a mesa-like configuration (a circular truncated cone shape or a frustrum of pyramid shape), and has a ceiling wall and a lateral wall. The ceiling wall is disposed at a position lower than the upper surface of the rubber sheet 54.

All the key-top members 26 are secured to an upper surfaces of the ceiling walls of the protuberances 54b, and these key-top members 26 slightly project the upper surface of the rubber sheet 54.

The key input unit 53 constructed as described above not only produces the same advantages as that in the first embodiment, but it also produces the same appearance as in a case where an upper panel partitioning a plurality of key-top members 26 from each other is mounted. Since a variety of symbols corresponding to the function of each key-top member 26 can be arranged on the upper panel, a design of the key input unit 53 can be more widely determined.

Next, referring now to Fig. 10, a sixth embodiment of the invention is described below.

A clicking rubber-key type key input apparatus according to the sixth embodiment has been improved from the fifth embodiment so that the key-top members 26 of the fifth embodiment are omitted.

More particularly, a plurality of protuberances 60b each having a mesa-like configuration (a circular truncated cone shape or a frustrum of pyramid shape) are provided in a plurality of pits 60a of a rubber sheet 60, and the thickness of each ceiling wall 60c of each protuberance 60b is sufficiently thicker than that of a lateral wall 60d. An upper surface of the ceiling wall 60c slightly projects from an upper surface of the rubber sheet 60. In consequence, the ceiling wall 60c loses its flexibility, and thus, the ceiling wall 60c can be used as a key-top member.

## Claims

1. A key-input apparatus characterized by comprising:
   housing means (10, 50) for accommodating an electronic circuit (14) therein;
   stationary contact means (11, 23) provided on an outer surface of said housing means and having a plurality of stationary contact portions (23a, 40); and
   movable contact means (24a, 32a, 31, 54b, 60b) supported on said housing and having a plurality of movable contact portions (25, 31a) which are respectively located at portions corresponding to the stationary contact portions, so as to be elastically movable between a contact position and a non-contact position, at the contact position the movable contact means being subjected with a pressing force and being deformed elastically to make the movable contact portions contact the corresponding stationary contact portions, at the non-contact position the movable contact means being free from the pressing force and being released from its elastic deformation to make the movable contact portions separate from the corresponding stationary contact portions.

2. The key-input apparatus according to claim 1, characterized in that said movable contact means includes;
   an elastic member made of an elastic sheet (24, 54, 60) which has a plurality of flexible protuberances (24a, 54b, 60b);
   a keytop member (26, 60c) mounted on an outer surface of a protruded end of said each flexible protuberance; and
   an electrically conductive member (25) mounted on an inner-surface of the protruded end of said flexible protuberance, so as to be contacted with the corresponding contact portion (23a) of said stationary contact means (11, 23) when said flexible protuberance is depressed.

3. The key-input apparatus according to claim 2, characterized in that said flexible protuberance (24a, 54b, 60b) includes a hollow, and said electrically conductive member (25) is mounted on a bottom surface of said hollow.

4. The key-input apparatus according to claim 2, characterized in that said flexible protuberance (24a, 54b, 60b) has a protruded end wall (24b, 60c) and a side wall (24c, 60a).

5. The key-input apparatus according to claim 4, characterized in that said flexible protuberance (24a, 54b, 60b) is formed to have a shape of a circular truncated cone or a frustum of pyramid.

6. The key-input apparatus according to claim 1, characterized in that said movable contact means includes;
   an elastic member (54, 60) made of an elastic sheet which has a plurality of pits (54a, 60a) and a plurality of flexible protuberances (54b, 60b) formed in said pits; and
   an electrically conductive member (25) mounted on an inner-surface of a protruded end of said each flexible protuberance, so as to be contacted with the corresponding stationary contact portion (23a) of said stationary contact means (23) when said flexible protuberance is depressed.

7. The key-input apparatus according to claim 6, characterized in that said movable contact means further includes;
   a keytop member (26) mounted on an outer surface of the protruded end of said flexible protuberance (54b).

8. The key-input apparatus according to claim 7, characterized in that said flexible protuberance (54b) has a protruded end wall and a side wall.

9. The key-input apparatus according to claim 8, characterized in that said flexible protuberance (54b) is formed to have a shape of a circular truncated cone or a frustum of pyramid.

10. The key-input apparatus according to claim 6, characterized in that said pits (54a, 60a) are formed in an outer surface of said elastic sheet (54, 60).

11. The key-input apparatus according to claim 10, characterized in that an outer surface of the protruded end of said flexible protuberance protrudes (54b, 60b) above the outer surface of said elastic sheet (54, 60).

12. The key-input apparatus according to claim 10, characterized in that said movable contact means further includes a keytop member (26) mounted on an outer surface of the protruded end of said flexible protuberance (54b), a top surface of said keytop member (26) protruding above the outer surface of said elastic sheet (54).

13. The key-input apparatus according to claim 6, characterized in that said flexible protuberance (54b, 60b) includes a hollow, and said movable contact member (25) is mounted on a bottom surface of said hollow.

14. The key-input apparatus according to claim 6, characterized in that the protruded end of said flexible protuberance (60b) forms a key top adapted to be manually depressed.

15. The key-input apparatus according to claim 14, characterized in that said flexible protuberance (60b) has a protruded end wall (60c) and a side wall (60d), said protruded end wall being thicker than said side wall.

16. The key-input apparatus according to claim 15, characterized in that said flexible protuberance (60b) is formed to have a shape of a circular truncated cone or a frustum of pyramid.

17. A key-input apparatus characterized by comprising:
a support (50);
an elastic sheet (54, 60) adapted to be mounted on said support and having a back surface facing said support;
a pit (54a, 60a) formed in a front surface of said elastic sheet;
a flexible upwardly extending protuberance (54b, 60b) formed in said pit;
a movable contact member (25) mounted on an inner surface of said flexible protuberance; and
stationary contact member (23a) mounted on said support under said movable contact member, whereby a key-input signal is generated when the movable contact member is brought into contact with said stationary contact member as said flexible protuberance is depressed.

18. The key-input apparatus according to claim 17, characterized by further comprising:
a keytop member (26) mounted on an outer surface of said flexible protuberance.

19. The key-input apparatus according to claim 18, characterized in that said keytop member (26) protrudes above the front surface of said elastic sheet (54).

20. The key-input apparatus according to claim 18, characterized in that said flexible protuberance (54b) has a protruded end wall and a side wall.

21. The key-input apparatus according to claim 20, characterized in that said flexible protuberance (54b) is formed to have a shape of a circular truncated cone or a frustum of pyramid.

22. The key-input apparatus according to claim 17, characterized by further comprising:
housing means (50), including said support forming the front surface thereof, for mounting said stationary contact member (23a) thereon.

23. The key-input apparatus according to claim 17, characterized in that said flexible protuberance (54b, 60b) includes a hollow, and said movable contact member is mounted on a bottom surface of said hollow.

24. The key-input apparatus according to claim 17, characterized in that an outer surface of the protruded end of said flexible protuberance (54b, 60b) protrudes above the front surface of said elastic sheet (54, 60).

25. The key-input apparatus according to claim 17, characterized in that the protruded end of said flexible protuberance (60) forms a keytop adapted to be manually depressed.

26. The key-input apparatus according to claim 17, characterized in that an outer surface of a protruded end of said flexible protuberance (60b) is adapted to be directly manually depressed.

27. The key-input apparatus according to claim 26, characterized in that said flexible protuberance (60b) has a protruded end wall (60c) and a side wall (60d), said protruded end wall being thicker than said side wall.

28. The key-input apparatus according to claim 27, characterized in that said flexible protuberance (60b) is formed to have a shape of a circular truncated cone of a frustum of pyramid.

**FIG.1**

THE KEY STROKE S

**FIG.2**

8

**FIG. 4**

**FIG.3**

FIG.5

FIG.6

FIG.7

FIG.9

FIG.8

FIG.10